(19) **Europäisches Patentamt / European Patent Office / Office européen des brevets**

(11) **EP 4 498 734 B1**

(12) # EUROPEAN PATENT SPECIFICATION

(45) Date of publication and mention
of the grant of the patent:
**22.07.2026  Bulletin 2026/30**

(21) Application number: **23188366.1**

(22) Date of filing: **28.07.2023**

(51) International Patent Classification (IPC):
**H04W 52/02** $^{(2009.01)}$

(52) Cooperative Patent Classification (CPC):
**H04W 52/0203;** Y02D 30/70

(54) **METHOD FOR PROVIDING A COMMUNICATION SERVICE BY A COMMUNICATION NETWORK**

VERFAHREN ZUR BEREITSTELLUNG EINES KOMMUNIKATIONSDIENSTES ÜBER EIN KOMMUNIKATIONSNETZ

PROCÉDÉ POUR FOURNIR UN SERVICE DE COMMUNICATION PAR UN RÉSEAU DE COMMUNICATION

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**29.01.2025  Bulletin 2025/05**

(73) Proprietor: **NTT DOCOMO, INC.
Tokyo 100-6150 (JP)**

(72) Inventors:
• **BAKHSHI, Bahador
80687 Munich (DE)**
• **SAMA, Malla Reddy
80687 Munich (DE)**

• **GUERZONI, Riccardo
80687 Munich (DE)**
• **ERKILIC CIVELEK, Tugce
80687 Munich (DE)**
• **MINOKUCHI, Atsushi
Tokyo, 100-6150 (JP)**

(74) Representative: **Viering, Jentschura & Partner mbB
Patent- und Rechtsanwälte
Am Brauhaus 8
01099 Dresden (DE)**

(56) References cited:
**EP-A2- 2 579 671      US-A1- 2020 260 376**

**Description**

The present disclosure relates to a method for providing a communication service by a communication network and a corresponding network.

Energy efficiency has become very important for a wide range of technical systems. This includes also mobile communication systems where energy consumption depends on various factors, most of all quality of service (e.g. in which quality video is streamed) but also other factors like time of the day and part of the architecture (e.g. radio access network) used (e.g. since energy consumption may depend on network load) and also the location of the end user (e.g. since energy consumptions may depend on the different network equipment in different locations). With a growing conscience of users regarding energy consumption (and in particular the environmental impact that comes with it), users may in fact be willing to help reducing energy consumption by showing flexibility regarding service provision. Accordingly, approaches are desirable which allow increasing energy efficiency of communication networks by involving users.

The document US 2020/260376 A1 discloses an example of the prior art.

According to one embodiment, a method for providing a communication service by a communication network according to claim 1 is provided.

Furthermore, a network according to claim 15 is provided.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:

Figure 1    shows a mobile radio communication system 100 configured according to 5G (Fifth Generation) as specified by 3GPP (Third Generation Partnership Project), i.e. a 5G communication system.

Figure 2    illustrates the provision of a communication service by means of a QoS (quality of service) flow via a communication network.

Figure 3    shows the communication network architecture with respect to energy efficient communication service provision in more detail.

Figure 4    shows a flow diagram illustrating a procedure for energy efficient provision of a communication.

Figure 5    shows an example of a service provision for which the procedure of figure 4 may be used.

Figure 6    shows a flow diagram illustrating a method for providing a communication service by a communication network.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

According to further embodiments, a computer program and a computer readable medium comprising instructions, which, when executed by a computer, make the computer perform the method of any one of the above examples are provided.

In the following, various examples will be described in more detail.

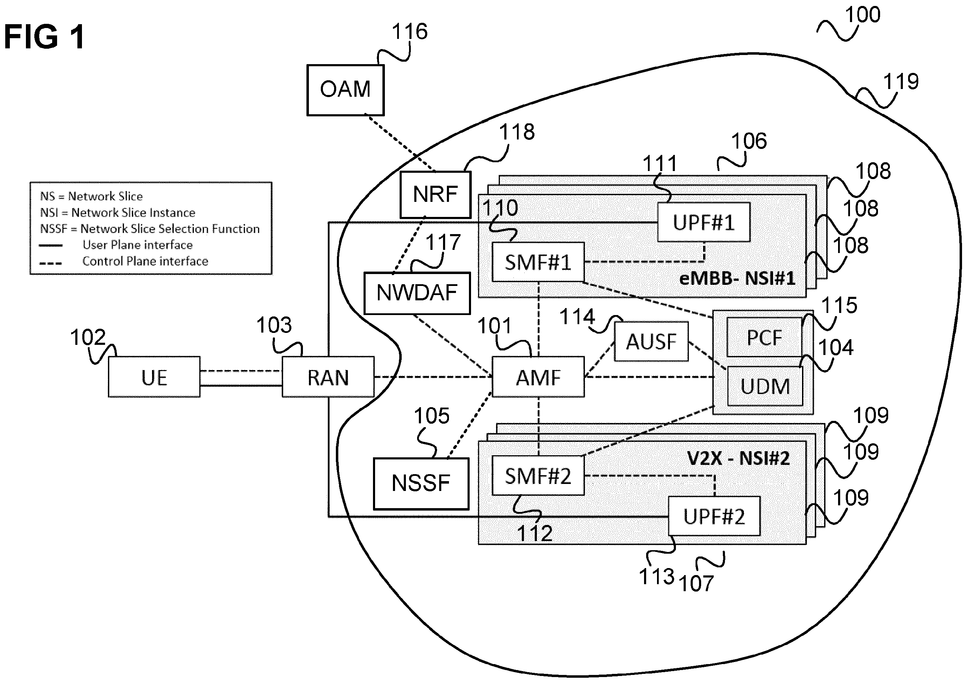

Figure 1 shows a mobile radio communication system 100 configured according to 5G (Fifth Generation) as specified by 3GPP (Third Generation Partnership Project), i.e. a 5G communication system. It should be noted that while a 5G architecture is used here as example, embodiments may also use a 6G architecture.

The mobile radio communication system 100 includes a mobile radio terminal device 102 such as a UE (user equipment), a nano equipment (NE), and the like. The mobile radio terminal device 102, also referred to as subscriber terminal (usually a mobile terminal), forms the terminal side while the other components of the mobile radio communication system 100 described in the following are part of the mobile communication network side, i.e. part of a mobile communication network (e.g. a Public Land Mobile Network PLMN).

Furthermore, the mobile radio communication system 100 includes a Radio Access Network (RAN) 103, which may include a plurality of radio access network nodes, i.e. base stations configured to provide radio access in accordance with a 5G (Fifth Generation) radio access technology (5G New Radio). It should be noted that the mobile radio communication system 100 may also be configured in accordance with LTE (Long Term Evolution) or another mobile radio communication standard (e.g. non-3GPP accesses like WiFi) but 5G is herein used as an example. Each radio access network node may provide a radio communication with the mobile radio terminal device 102 over an air interface. It should be noted that the radio access network 103 may include any number of radio access network nodes.

The mobile radio communication system 100 further includes a core network (5GC) 119 including an Access and Mobility Management Function (AMF) 101 connected to the RAN 103, a Unified Data Management (UDM) 104 and a Network Slice Selection Function (NSSF) 105. Here and in the following examples, the UDM may further consist of the actual UE's subscription database, which is known as, for example, the UDR (Unified Data Repository). The core network 119 further includes an AUSF (Authentication Server Function) 114 and a PCF (Policy Control Function) 115.

The core network 119 may have multiple core network slices 106, 107 and for each core network slice 106, 107, the operator (also referred to MNO for Mobile Network Operator) may create multiple core network slice instances 108, 109. For example, the core network 119 includes a first core network slice 106 with three core network slice instances (CNIs) 108 for providing Enhanced Mobile Broadband (eMBB) and a second core network slice 107 with three core network slice instances (CNIs) 109 for providing Vehicle-to-Everything (V2X).

Typically, when a core network slice is deployed (i.e. created), network functions (NFs) are instantiated, or (if already instantiated) referenced to form a core network slice instance and network functions that belong to a core network slice instance are configured with a core network slice instance identification.

Specifically, in the shown example, each instance 108 of the first core network slice 106 includes a first Session Management Function (SMF) 110 and a first User Plane Function (UPF) 111 and each instance 109 of the second core network slice 107 includes a second Session Management Function (SMF) 112 and a second User Plane Function (UPF) 113. The SMFs 110, 112 are for handling PDU (Protocol Data Unit) sessions, i.e. for creating, updating and removing PDU sessions and managing session context with the User Plane Function (UPF).

The RAN 103 and the core network 119 form the network side of the mobile radio communication system, or, in other words, form the mobile radio communication network. The mobile radio communication network and the subscriber terminals accessing the mobile radio communication network form, together, the mobile radio communication system.

The mobile radio communication system 100 may further include an OAM (Operation, Administration and Maintenance) system 116, e.g. implemented by one or more OAM servers, which is connected to the RAN 103 and the core network 119 (connections are not shown for simplicity). The OAM system 116 may include an MDAS (Management Data Analytics Service). The MDAS may for example provide an analytics report regarding network slice instance load. Various factors may impact the network slice instance load, e.g. number of UEs accessing the network, number of QoS flows, the resource utilizations of different NFs which are related with the network slice instance.

Further, the core network 118 comprises an NRF (Network Repository Function).

The core network 119 may further include a Network Data Analytics Function (NWDAF) 117. The NWDAF is responsible for providing network analysis and/or prediction information upon request from network functions. For example, a network function may request specific analysis information on the load level of a particular network slice instance. Alternatively, the network function can use the subscribe service to ensure that it is notified by the NWDAF if the load level of a network slice instance changes or reaches a specific threshold. The NWDAF 117 may have an interface to various network functions on the mobile communication network side, e.g. to the AMF 101, the SMFs 110, 112 and the PCF 115. For simplicity, only the interface between the NWDAF 117 and the AMF 101 is depicted.

For example, NWDAF analytics should allow monitoring the number of UEs registered in a network slice instance and their Observed Service Experience. In addition to OAM system performing SLA (service level agreement) assurance, 5GC NFs may take actions based on NWDAF slice QoE (quality of experience) analytics to prevent further service experience degradation in the network slice instance.

The NSSF 105 or AMF 101 may for example determine when a load distribution decision is required to address an issue identified by processing the analytics result (i.e. network analysis and/or prediction information) provided by the NWDAF 117. For example, when a network slice instance is detected or forecast to experience service experience degradation, new UE registrations or PDU sessions may not be assigned to that network slice instance anymore by triggering a network slice load distribution mechanism. The NSSF 105, AMF 101 and/or OAM system 116, for example, may also simultaneously subscribe to both slice service experience and slice load analytics from the NWDAF 117. One or multiple subscriptions to one or multiple S-NSSAI(s) and NSI(s) are possible.

So, analytics information provided by NWDAF 117 may be used to optimize load distribution, in particular to achieve quality of service (QoS) requirements. However, this may not be the only goal in a communication system. In particular, e.g. due to environmental issues, energy efficiency is one of key goals of 5G and 6G and a mobile network operator may want to achieve high energy efficiency, in particular of the networks core network, e.g. 5GC (5G core network), e.g. for marketing or cost reasons.

Lowering energy consumption may in many cases result in a loss of quality of service. However, a user (also denoted as "consumer") of a communication service may find it acceptable to have loss of QoS when this results in reduced energy consumption (and the mobile network operator may provide incentives for this, e.g. reduce the fee for a communication service when the user uses it with lower quality of service (and thus lower energy consumption)).

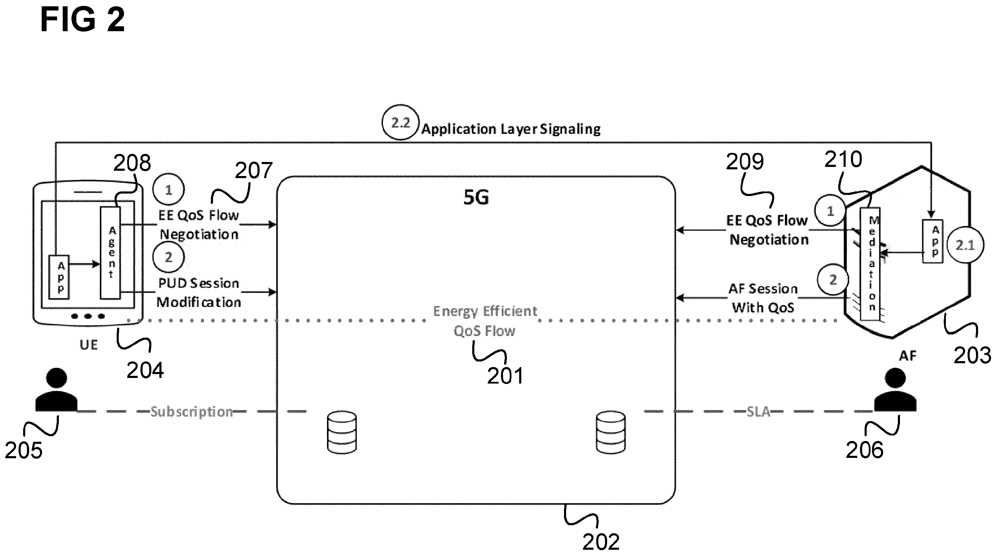

Figure 2 illustrates the provision of a communication service by means of a QoS flow 201 (corresponding to a respective QoS profile) via a (e.g. 5G) communication network 202.

The communication service is here a data transmission between an application function 203 and a subscriber terminal (UE) 204. The user 205 of the subscriber terminal 204 (also denoted as end user here) has a subscription with the operator of the communication network 202. An application provider 206 uses the application function 203 to provide an application, like video data streaming to the end user 205 or distribution of a machine learning model for federated learning. The application provider 206 has a service level agreement (SLA) with the operator of the communication network 202.

Both the end user 205 and the application provider 206 are denoted as consumers (or also customers, each using a respective user device) of the communication service (data transmission) of the 5G communication network.

As mentioned above, a service customer 205, 206 may find a loss of QoS or a delay in service provisioning acceptable if this reduces energy consumption to provide the modified (in terms of QoS and/or provisioning time) communication services.

Accordingly, according to various embodiments, a method is provided for a customer 205, 206 to inform the communication network 202 that they are interested in an energy efficient service (and in particular an energy efficient QoS flow 201). The subscription of the end user and the SLA of the application provider may include energy efficiency information such as the indication that these customers 205, 206 are interested in this option.

In the following examples, it is assumed that a PDU session for the communication service has already been established and thus the negotiation for energy efficient service provision takes place subsequently.

Further, it is assumed that the communication service is an adaptive service in the sense that the customers 205, 206 can adapt to different QoS profiles, e.g., different quality of multimedia and/or the customers 205, 206 can adapt to different service times, e.g., the time of a AIML (artificial intelligence machine learning) model update, the time when a game starts etc.

It is further assumed that at least one of the customers 205, 206 is interested in an energy-efficient service provision, i.e. that a customer 205, 206 is interested to decrease energy consumption, e.g. for the following reasons:

- Incentive by the operator (e.g., billing compensation/discount)
- Business objective (e.g., green business)
- External incentives (e.g., regulatory enforcements)

Accordingly, the communication service provision mechanism provided according to various embodiments may be seen to be based on the assumption that one or both customers 205, 206 intend(s) to collaborate with the mobile network operator to reduce energy consumption of the communication service via adapting to different service levels. In particular, according to various embodiments, at least one of the customers 205, 206 is aware of the possibility of reduction of energy consumption.

According to various embodiments, a customer 205, 206 may indicate the interest in actively and explicitly contributing to energy efficiency in addition to desired service quality (and also flexibility regarding service quality in view of possible energy savings), i.e. the customer 205, 206 provides information about desired QoS (e.g. a certain range of acceptable QoS profiles) + Energy Efficiency Information (in particular e.g. the information that QoS loss is acceptable for energy consumption reduction).

The desired QoS is typically known by the customer 205, 206, and the communication network 202 may determine it via a QoS profile the application function 203 or the subscriber terminal 204 indicates when requesting a QoS Flow.

However, the energy efficiency of the communication service is typically not static and not given by the information known by the customer in advance (even when assuming a specific QoS profile) and it is not straightforward to be calculated by the customer 205, 206 using information typically exposed by the communication network 202. This is because exposed information depends on network deployment and typically not all details are exposed to the customer and the energy consumption depends on time since network entities involved in the communication service can be different at different times. Furthermore, energy consumption typically depends on the location of the end point(s) of the communication service (i.e. here at least of the location of the subscriber terminal 204 which may change over time) since network entities involved in the communication service can be different for different location of UE.

In view of the above, according to various embodiments, a user 205, 206 is enabled to actively and explicitly contribute to energy efficiency by being informed by the communication network about the energy consumption of different communication service (provision) options, i.e. options for providing the communication service, e.g. transmission opportunity options (like transmission time). The customer may then select an adequate energy efficient service provision.

According to various embodiments, an energy efficient (EE) QoS flow 201 for the communication service is provided by negotiating EE QoS flow parameters by EE QoS flow negotiation 207 with the communication network 202 by an agent 208 in the subscriber terminal 204 or EE QoS flow negotiation 209 with the communication network 202 a mediation layer 210 in the AF 203.

When the QoS flow parameters have been negotiated, the corresponding EE QoS flow 201 may be requested by the subscriber terminal 204 e.g. by a "PDU Session Modification" procedure or by the AF 203 via the "AF Session With QoS" procedure triggered by a request from the subscriber terminal 204 received by the communication network 202 via application layer signalling or based on AF internal logic, respectively.

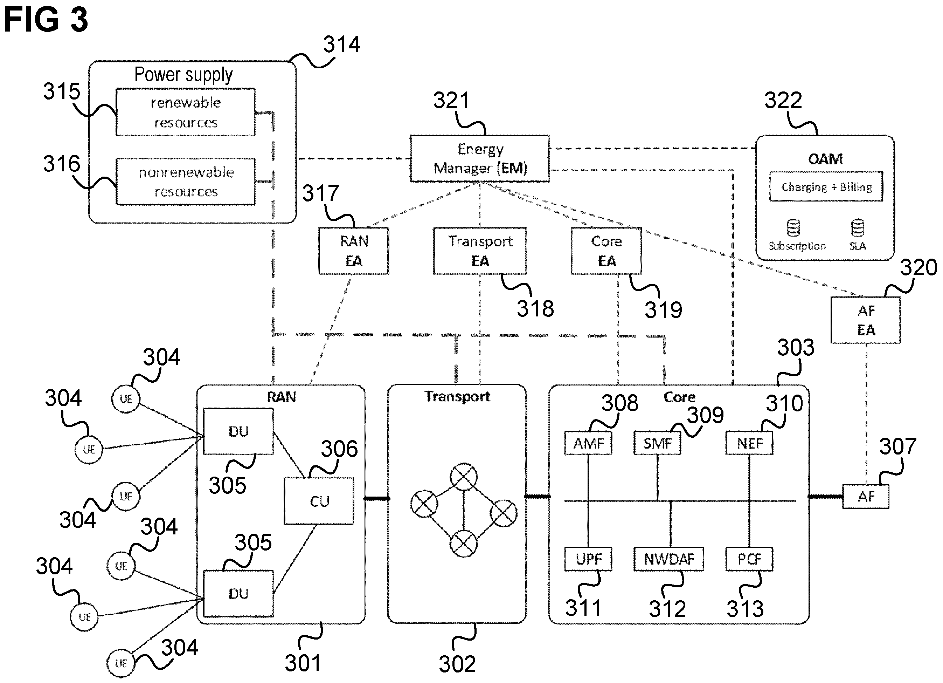

Figure 3 shows the communication network architecture with respect to energy efficient communication service provision in more detail.

The communication network comprises, in this example a radio access network (RAN) 301, a core network 303 and a transport (communication) network 302 connecting the RAN 301 to the core network 303. Subscriber terminals 304 (one of which corresponding to the subscriber terminal 204) are connected to distributed units 305 of the RAN 301 which are connected to a centralized unit 306 (to implement base stations of the RAN 301). An application function 307 (corresponding to AF 203) is connected to the core network 303. As explained with reference to figure 1, the core network 303 comprises various network functions like an AMF 308, an SMF 309, an NEF 310, a UPF 311, an NWDAF 312 and a PCF 313.

The communication network, formed of the three "domains" RAN 301, transport network 302 and core network 303, is supplied by power from a power supply 314 which may include different types of power sources 315, 316, namely one or more power sources providing power from renewable resources 315 and one or more power sources providing power from non-renewable sources 316. These differ in environmental impacts, typically also differ in charging rates and may have different location and time dependent power provisioning characteristics.

For each domain 301, 302, 303 a respective energy analyzer 317, 318, 319 is provided. Each of these energy analyzers is configured to provide a prediction of energy consumption of a communication service provision (according to specific communication service provision option) considering the corresponding domain's configuration and required resources for provisioning the communication service as well, e.g. using an ML model trained using the data gathered from the respective domain in different times, different configurations, different load conditions, etc. An energy analyzer may also be able to provide a level of the accuracy of the prediction it provides indicating how much it is certain about the predicted energy consumption of the given communication service.

Further an energy analyzer 320 for the as well as for the AF 307 is provided to provide analysis of the energy consumption of service provisioning by the corresponding application service.

Further, an energy manager 321 of the communication network is provided which is configured to compute (i.e. estimate) energy consumption of a communication service provision (according to specific communication service provision option), e.g. energy consumption of a QoS flow with a given QoS profile, transfer time, and UE location from the information predicted by the energy analyzers 317, 318, 319, 320.

The energy manager 321 is coupled to an OAM system 322 (including a charging & billing functionality) which is configured to store UE subscription information and application provider SLA information including charging rates for communication services (depending of the provision option, e.g. considering and compensation for energy savings).

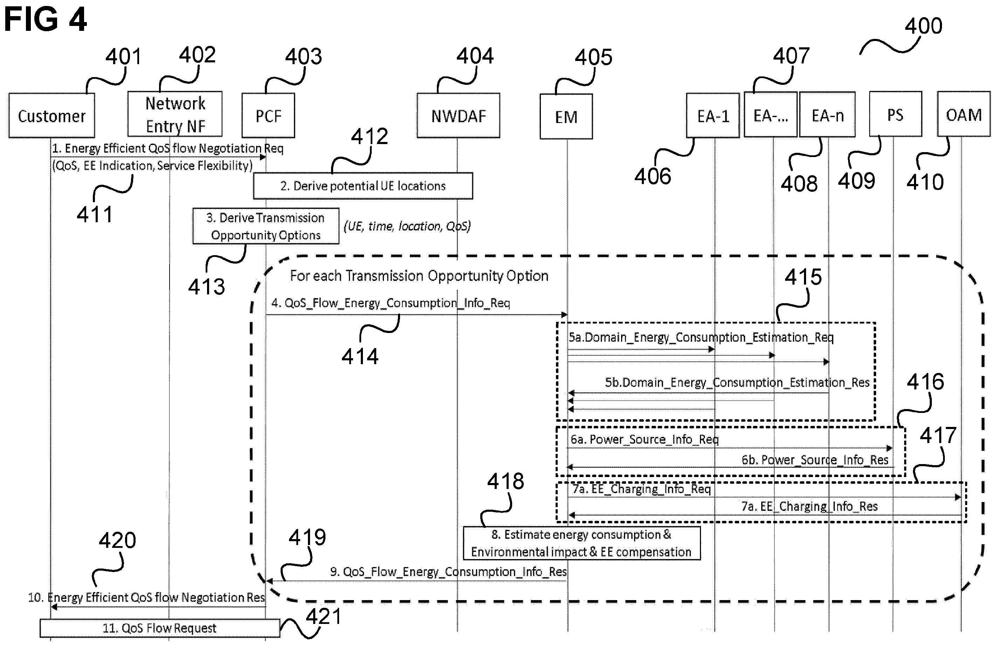

Figure 4 shows a flow diagram 400 illustrating a procedure for energy efficient provision of a communication (in this example specifically provision of an energy efficient QoS flow for the communication service).

A customer 401 (corresponding to subscriber terminal 204 or AF 203), a network entry network function 402 (of the communication network 202, e.g. an AMF etc.), a PCF 403, an NWDAF 404, an energy manager 405 (corresponding to energy manager 321), energy analyzers 406, 407, 408 (corresponding to domain energy analyzers 317-319 and possibly also the AF energy analyzer 320), a power supply 409 (corresponding to power supply 314) and an OAM system 410 (corresponding to OAM system 322) are involved in the flow.

In 411, the customer 401 starts energy efficient (EE) QoS flow negotiation (i.e. negotiation for (service provision) parameters of an energy efficient QoS flow) by a QoS flow negotiation request via the network entry network function 402 to the PCF 403.

In case that the customer is the end user 205, this may be done by the agent 208 sending an Energy Efficient QoS Flow Negotiation NAS message to an AMF (which is the network entry NF 402 in that case) and the AMF sending a Npcf_EEQF_PolicyControl_Create to the PCF 403 via a corresponding PCF API (application programming interface) in reaction to the Energy Efficient QoS Flow Negotiation NAS Message.

Alternatively to the new NAS message "Energy Efficient QoS Flow Negotiation NAS message", the request of 411 can (for the case that the customer is the end user) be implemented by extending an existing NAS message, e.g. extending the "PDU Session Modification NAS" message by an indicator that there should be a negotiation before the QoS request.

In case that the customer is the application provider 206, 401, the request of 411 may be implemented by the mediation layer 210 sending an Nnef_EEQFNegotiation_Create message to an NEF (which is the network entry NF 402 in that case) via a corresponding NEF API and the NEF sending a Npcf_EEQF_Policy-Control_Create message to the PCF 403 via a corresponding PCF API in reaction to the Nnef_EEQFNegotiation_Create message.

Alternatively to a new NEF API, the request of 411 can (for the case that the customer is the AF) be implemented by extending the existing NEF APIs, e.g., extending the Nnef_AFSessionWithQoS message by an indicator that there should be a negotiation before the QoS request.

Further, alternatively to a new PCF API, the request of 411 can be implemented by extending an existing PCF APIs, e.g., extending the Npcf_PDTQPolicyControl_Create message by an indicator that energy efficiency and environmental impacts should be negotiated.

The respective message sent by the customer 401 for the QoS flow negotiation request may include

- a desired QoS profile
- (implicitly or explicitly ) a target UE
- an Energy Efficient Service Indicator: 0/1 (i.e. an indication whether energy efficiency is desired)
- a desired transmission time (and optionally the duration of the service)
- QoS profiles adaptability level from the interval [0,1] (i.e. an indication of the flexibility of the customer regarding the QoS, bigger values imply more flexibility for QoS profiles other than the indicated desired QoS profile)
- transmission time adaptability level from the interval [0,1] (i.e. an indication of the flexibility of the customer regarding transmission time differing from the indicated desired transmission time)

Because of the possible dependency of service energy consumption on the location of the end user, in 412, the PCF 403 derives potential UE locations. For this purpose, first, considering the desired transmission time and the transmission time adaptability level, it derives a list of potential transmission time windows, then, the PCF 403 for example subscribes to the UE location analytics provided by NWDAF 404 and thus in this way gets the prediction of the UE location per transmission derived time window.

For example for a given request

*Req. 1: (QoS Profile = 5QI-88, Target UE = UE1, EE Service Indication = 1, Desired Transmission time = Now, QoS adaptability level = 0.3, Transmission adaptability level = 0.8)*

PCF first derives some transmission time considering the given desired transmission time and its corresponding adaptability; e.g., in this example

$$T1 = Now, \; T2 = Now + 10min$$

Then it gets prediction of the location of the UE in these time windows by subscribing to NWDAF; e.g., in this example

*Location in T1 $\rightarrow$ L1, Location in T2 $\rightarrow$ L2.*

In 413, the PCF 403 derives transmission opportunity options (i.e. different options for providing the communication service, here specifically options for the QoS flow). This means that the PCF 403 derives, considering the desired QoS profile and the QoS profiles adaptability level, the derived transmission time windows, and also the predicted locations of UE, PCF derives a list of transmission opportunity options where each option is for example given as (UE, time, location, QoS Profile). For example, for the given request **Req. 1** and its corresponding predicted UE locations, the PCF may derive e.g. a list of three options:

*(UE1, Now, L1, 5QI-88)*
*(UE1, Now + 10min, L2, 5QI-88)*
*(UE1, Now, L1, 5QI-86)*

In 414, the PCF 403 requests the energy manager 405 to calculate (estimate) the information related to energy consumption of each transmission opportunity in the list the PCF has derived in 413.

In 415, the energy manager 405 subscribes to each energy analyzer 406, 407, 408 requesting the prediction of energy consumption of the given transmission opportunity. It is assumed that each energy analyzer 406, 407, 408 has a trained a ML model and is configured to provide the requested prediction using the ML model.

The energy manager 405 may thus map each transmission opportunity to an energy consumption value or level, e.g. low, medium, high, (EC, e.g. per domain), like

*(UE1, Now, L1, 5QI-88) $\rightarrow$ RAN EC1, Core EC1*

In 416, the energy manager 405 requests information about the power source from the power supply 409 for each domain for each option (i.e. transmission opportunity in the list) and for the corresponding energy consumption (estimated in 415); and the power supply 409 in response provides the amount of (non)renewable energy ((N)RE) and/or corresponding environmental impact (EI, e.g., carbon emission) for each domain and the option (e.g. each time window), e.g.

*(UE1, Now, L1, 5QI-88), RAN EC1, Core CE1 $\rightarrow$*

> *RAN RE1, RAN NRE1, RANEI1*
> *Core RE1, Core NRE1, Core EI1*

In 417, the energy manager 405 requests charging information for the transmission opportunity options which are related to energy efficiency from the OAM system 410. The OAM 410 uses the information included in UE subscription or application provider SLA, respectively and information about the operator policy and returns charging information to the energy manager 405, e.g.

*(UE1, Now, L1, 5QI-88), EC1, RE1, NRE1, EI1 $\rightarrow$ Charging rate 1, Compensation 1*

In 418, the energy manager 405 collects the information about energy consumption, environmental impact and EE compensation. This means that based on the information the energy manager 405 gathered from the energy analyzers 406, 407, 408, the power supply 409 and the OAM system 410, it computes the following criteria per transmission opportunity option (of the list of transmission opportunity options):

1) Total (estimation of) energy consumption of the option
2) Environmental impact of the option e.g., estimation of the carbon emission
3) The compensation that the operator provides for this option as an incentive for the customer

For example,
*(UE1, Now, L1, 5QI-88) $\rightarrow$*

*1) EC1*
*2) RE1, NRE1, EI1*
*3) Compensation 1*

Applying corresponding criteria, the consumer 401 may select one of the proposed transmission opportunity options using this information.

For this, in 419, the energy manager 405 sends a QoS flow energy consumption information response to the PCF including the collected information, i.e. the information about the energy consumption, environmental impact and compensation per transmission opportunity option to the PCF (in response to the request of 414) and, in 420, the PCF 403 sends a list of transmission opportunities (i.e. a service options list) and corresponding information, i.e. e.g. a list of tuples *(time, QoS profiles, Energy consumption, Environmental impact, Compensation)* to the UE 401 in response to the request of 411.

In 421, the customer 401 selects one of the options and requests provision of the communication service accordingly, in this case requests a certain QoS flow.

In case that the customer is the end user 205, this may be done by the subscriber terminal 204 (e.g. agent 208) sending a PDU Session Modification NAS Message to an AMF (which is the network entry NF 402 in that case) and the AMF sending a Nsmf_PDUSession_UpdateSMContext message to an SMF in reaction to the PDU Session Modification NAS Message.

In case that the customer is the application provider 206, the request of 421 may be done by the AF 203 (e.g. mediation layer 210) sending an Nnef_AFSessionWithQoS message to an NEF (which is the network entry NF 402 in that case) and the NEF sending a Npcf_Policy Authorization Create message to the PCF 403 in reaction to the Nnef_AFSessionWithQoS message.

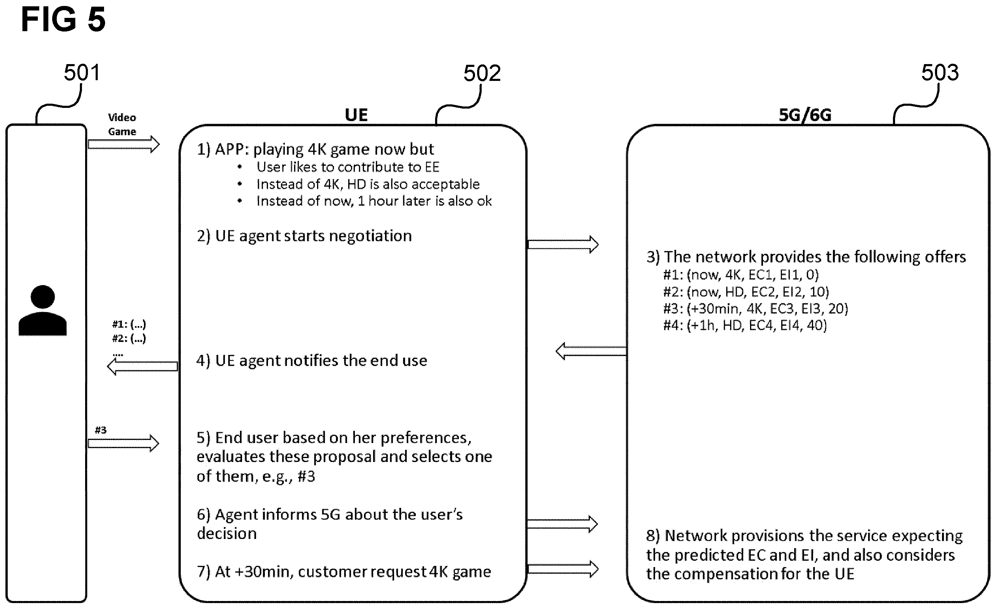

Figure 5 shows an example of a service provision (data transmission for a video game in this example) for which the procedure of figure 4 may be used.

An end user 501, a UE 502 (corresponding to the mobile 204) and a 5G/6G network 503 (corresponding to the communication network 202) are involved in the flow.

It is assumed that the UE 502 an application for playing 4K game is started (presently) but the user likes to contribute to energy efficiency, instead of 4K, HD is also acceptable for the end user and instead of now, playing one hour later is also ok for the user.

The UE agent (e.g. agent 208) starts negotiation about energy efficient service provision.

The network 503, e.g. operating according to figure 4, provides the following offers

#1: (now, 4K, EC1, EI1, 0)
#2: (now, HD, EC2, EI2, 10)
#3: (+30min, 4K, EC3, EI3, 20)

#4: (+1h, HD, EC4, EI4, 40)

wherein the last value is the compensation.

The UE agent notifies the end user 501 about these options (i.e. displays them to the end user) The end user 501 then based on his or her preferences, evaluates these options and selects one of them, e.g., #3.

The UE agent then informs the network about the user's decision and, accordingly, at +30min (i.e. in 30 minutes), requests a 4K game.

The network 503 then provides the service expecting the predicted EC and EI, and also considers the compensation for the end user 501.

The AF 203 can also request multiple QoS flows, e.g. for multiple UEs 304 (e.g., for AIML model downloading) or for a single UE 201 but a complex application (e.g. an extended reality application).

As explained above, the customer may be an end user or an application provider. Exemplary embodiments are

- the customer is an end-user and the QoS flow is requested via PDU session modification procedure
- the customer is an application provider and AF requests the QoS flow by AF SessionWithQoS
- the customer is an end-user, App in the UE has application layer signalling with AF and AF requests the QoS flow on behalf of UE.

According to one embodiment, if the energy analyzer 317, 318, 319 of a domain (e.g., transport) is not available, the approach described above can be applied for the domains with available EA.

According to one embodiment, in addition to the adaptability levels, the PCF 403 can take into account the accuracy of predictions provided by the NWDAF 404 and EAs 406, 407, 408 in deriving the transmission opportunity options. For example, if the accuracy of prediction of the location of UE by the NWDAF 404 or the accuracy of the prediction of the energy consumption of a domain by its corresponding EA 406, 407, 408 is low for a given time window, the PCF 403 may exclude the time window from the list.

Further, it should be noted that while the procedure of figure 5 is described on QoS flow level, a similar approach can also be used for negotiating energy efficient network slice selection (i.e. the communication service provision options may include which slice is selected in addition to or alternatively to QoS flow selection). In that case, instead of (or in addition to) estimation (prediction) of the energy consumption and/or environmental impacts of the QoS flow, the energy manager 405 provides estimation (prediction) of the energy consumption and environmental aspects of different possible network slices to the Network Slice Selection Function (NSSF).

Similarly, a similar approach can also be used for negotiating energy efficient access network selection and roaming. In that case, instead of estimation (prediction) of the energy consumption and/or environmental impacts of the QoS flow, the energy manager 405 provides estimation (prediction) of the energy consumption and environmental aspects of different possible network operators, and the customer 401 (UE in that case) can select the most energy efficient one.

So, the various communication service provision options may differ in QoS flow (i.e. e.g. a QoS profile), the slice used, and/or the radio access network used by the UE (or multiple UEs).

It should further be noted that according to various embodiments, the negotiation and selection (e.g. according to the procedure of figure 4) is not performed for every PDU establishment. Rather, the communication network operator can limit it to be performed only for high energy consuming communication services to avoid consuming energy for performing this negotiation of very short-lived services (with low energy consumption anyway). For example, for each requested communication service, the network may determine whether it qualifies as a high energy consumption communication service and only treat it as described above if it has been determined that it qualifies as a high energy consumption communication service (e.g. an expected energy consumption is above a predefined threshold and/or the requested communication service belongs to a predefined set of high energy consumption services (e.g. video streaming etc.)).

Examples of how the energy manager 321 can predict (estimate) energy consumption of QoS flow per domain 301, 302, 303 using the energy consumption of equipment of the domain are:

- Computing based on an energy model and its corresponding parameters of the equipment which is provided by the vendor of the equipment. The energy model and parameters can be derived by measurement in the laboratories e.g., the energy consumption model of gNB is $e = x1 * DRB + x2 * F$ where x1 and x2 are equipment parameters, DRB is the number of Data Radio Bearers and F is the frequency
- Estimation and prediction based using ML models. For example, the energy manager 321 monitors the energy consumption of the equipment (which is provided by operator using e.g. 3GPP SA5 specifications) for different configurations (load, number of QoS flows, ...) and uses the data to train an ML model to predict the energy consumption of a given QoS flow.

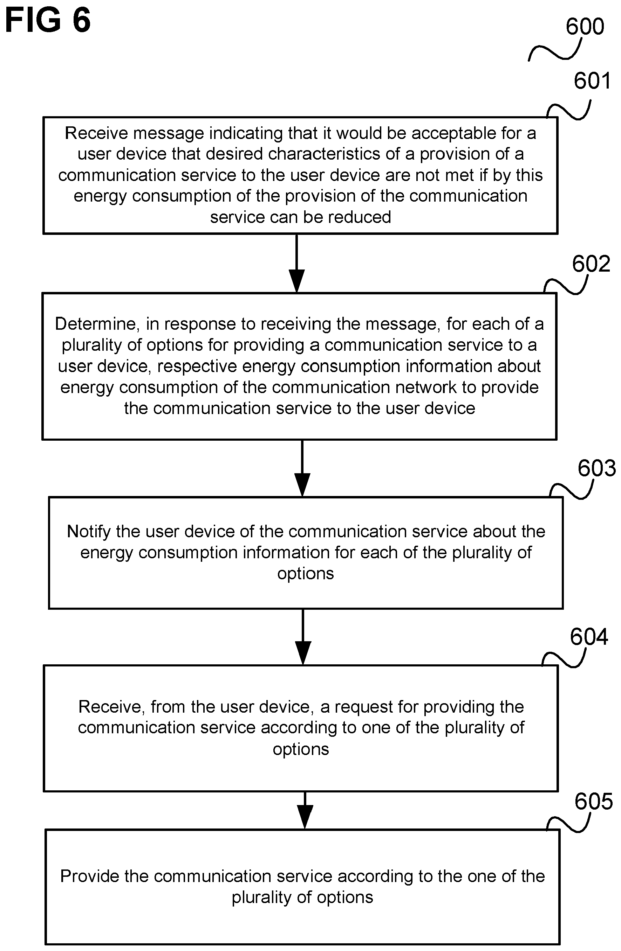

In summary, according to various embodiments, a method is provided as illustrated in figure 6.

Figure 6 shows a flow diagram 600 illustrating a method for providing a communication service by a communication network.

In 601, a message is received indicating that it would be acceptable for a user device that desired characteristics of a provision of a communication service to the user device are not met if by this energy consumption of the provision of the communication service can be reduced. The message is for example received from the user device. This can be seen as the start of a negotiation of the provision of the communication service.

In 602, in response to (i.e. in reaction to, i.e. triggered by) receiving the message, for each of a plurality of options for providing the communication service to the user device, respective energy consumption information about energy consumption of the communication network to provide the communication service to the user device is determined.

In 603, the user device of the communication service is notified about the energy consumption information for each of the plurality of options.

In 604, a request for providing the communication service according to one of the plurality of options is received from the user device.

In 605, the communication service is provided according to the one of the plurality of options.

According to various embodiments, in other words, a user is enabled to select an option how a communication service that the user wants to be provided depending on the energy consumption of various available options.

By providing this new functionality, energy efficiency of 5GC can (at least in average over multiple users) be increased. The user may request energy efficient (EE) service by negotiation between the user's user device and the core network (e.g. 5GC), where the user expresses to be interested to contribute to energy efficiency and to be flexible for service terms, the network side provides multiple offers (i.e. options) for service provision, e.g. with different QoS (e.g. QoS profiles), service provisioning time, energy consumptions and incentives (i.e. compensation).

For implementing the approach of figure 6 in a 3GPP network new inputs for the services requesting APIs (in particular the energy efficiency related parameters) and a new backend procedure to derive energy efficiency information of the service and to make negotiation between 5GC and the customer may be introduced.

The energy consumed to provide a communication service is not a predetermined static given value but depends on the quality of the service, the location of the service (i.e. of devices in involved in the service), the time at which the service is provided. On the other hand, some applications (and services they use) are not restricted in terms of service quality and time. The approach of figure 6 allows exploiting application adaptability to decrease energy consumption of the network and contributes to the reduction of operation costs, environmental impact of the respective network and the services and thus helps meeting the business and social objectives via negotiation between the consumer and the network (and e.g. providing incentives to the customer).

According to various embodiments, the approach of figure 6 enables collaboration between the network and customer for energy efficiency via providing a list of transmission opportunity options. It considers the dynamic nature of energy consumption of services, e.g. in terms of QoS, time and location.

According to various embodiments,

- Negotiation on service energy efficiency, indicated by the customer's interest in energy efficient service, is done before service establishment
- the customer indicates his/her flexibility in service characteristics in terms of QoS and/or service provisioning time via the corresponding adaptability levels
- energy consumption dynamics are considered depending on QoS, time and location
- different sources of energy and consequently environmental impact are considered
- an incentive for the customer is provided via compensation and/or
- information for multiple selection criteria (energy consumption, environmental impact, compensation) for service selection are provided.

According to various embodiments, selecting energy efficient service provision by customers is enabled by providing an energy manager that predicts (estimates) energy efficiency information of (for example) a QoS flow via connecting to energy analyzers of different domains and by procedures for negotiating energy efficient service provision, e.g. to have the customer provide indication of energy efficiency and service adaptivity parameters and the network to provide service provision options including transmission time, QoS profile, energy consumption, environmental impact and compensation. Different power sources may provide the required energy for the network with different prices and different environmental impacts and customers may be encouraged to contribute to energy saving via compensation provided by the operator. The energy consumption (in a time window in future) is for example predicted via ML models by the energy analyzers of different domains.

The options for example differ in quality of service profile (of a set of quality of service profiles predefined in the communication network).

The method may be performed and the various components involved in performing the method (in particular the various network components like the energy manager, energy agents and the various network functions) may for example be implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program.

Any other kind of implementation of the respective functions described above may also be understood as a "circuit".

While specific aspects have been described, it should be understood by those skilled in the art that various changes in form and detail may be made therein without departing from scope of the aspects of this disclosure as defined by the appended claims. The scope is thus indicated by the appended claims.

**Claims**

1. A method (600) for providing a communication service by a communication network (202), comprising:

   receiving (601), by the communication network (202), a message (411) from a user device (102, 204, 304) indicating that it would be acceptable for the user device (102, 204, 304) that one or more desired characteristics of a provision of a communication service to the user device are not met, if by this energy consumption of the communication network (202) to provide the communication service can be reduced;
   determining, by the communication network (202), a plurality of options for providing the communication service to the user device (102, 204, 304);
   determining (602), by the communication network (202) and in response to receiving the message (411), for each of the plurality of options for providing the communication service to the user device (102, 204, 304), respective energy consumption information about energy consumption of the communication network (202) to provide the communication service to the user device (102, 204, 304);
   notifying (603), via the communication network (202), the user device (102, 204, 304) of the communication service about the energy consumption information for each of the plurality of options;
   receiving (604), from the user device (102, 204, 304), a request for providing the communication service according to one of the plurality of options; and
   providing (605), by the communication network (202), the communication service according to the one of the plurality of options.

2. The method of claim 1, wherein the plurality of options differ in at least one of quality of service of the communication service, which network slice of a plurality of network slices (106, 107) of the communication network (202) is used for providing the communication service, time of provision of the communication service, resolution of video data transmitted by the communication service.

3.   The method of claim 1 or 2, wherein the desired characteristic is a quality of service and/or a time of provision of the communication service.

4.   The method of claim 3, wherein the message (411) indicates a range of quality of service and/or time of the provision of the communication service, respectively.

5.   The method any one of claims claim 1 to 4, wherein the energy consumption information includes information about whether and/or how much of energy consumed by the communication network to provide the communication service is renewable energy according to the respective option.

6.   The method any one of claims claim 1 to 5, wherein the energy consumption information includes information about the environmental impact of the provision of the communication service according to the respective option.

7.   The method any one of claims 1 to 6, comprising determining the information of the environmental impact at least partially from a power supply (314) of the communication network (202).

8.   The method any one of claims 1 to 7, comprising determining, for each of the plurality of options for providing the communication service, a respective compensation for a user of the user device (102, 204, 304) for using the option.

9.   The method any one of claims 1 to 8, wherein each of the options comprises usage of at least one respective quality of service flow, wherein the at least one quality of service flow differs among the options.

10.   The method any one of claims 1 to 9, wherein the communication network (202) comprises a radio access network (103, 301), a core network (119, 303) and a transport network (302) and wherein determining the energy consumption information for an option comprises estimating the energy consumption of each of the radio access network (103, 301), the core network (119, 303) and the transport network (302) and estimating the energy consumption information for the option from the estimated energy consumption of the radio access network (103, 301), the core network (119, 303) and the transport network (302).

11.   The method of claim 10, wherein the energy consumption information for an option is determined by an energy manager component (321, 405) of the communication network (202) which acquires the estimate of the energy consumption of the radio access network (103, 301) from an energy agent component (317) of the radio access network (103, 301), the estimate of the energy consumption of the core network (119, 303) from an energy agent component (319) of the core network (119, 303) and the estimate of the energy consumption of the transport network (302) from an energy agent component (318) of the transport network (302).

12.   The method any one of claims 1 to 11, comprising determining the plurality of options depending on a location of the user device (102, 204, 304) and/or a prediction of one or more future locations of the user device (102, 204, 304).

13.   The method any one of claims 1 to 12, comprising determining, for a requested communication service, whether the communication service qualifies as a high energy consumption communication service and determining the energy consumption information and notifying the user device (102, 204, 304) about the energy consumption in response to the determination that the requested communication service qualifies as a high energy consumption communication service.

14.   The method any one of claims 1 to 13, wherein the user device (102, 204, 304) is a subscriber terminal or an application function.

15.   A communication network (100, 202) configured to perform the method of any one of claims 1 to 14.

**Patentansprüche**

1.   Ein Verfahren (600) zum Bereitstellen eines Kommunikationsdienstes durch ein Kommunikationsnetz (202), aufweisend:

   Empfangen (601), durch das Kommunikationsnetz (202), einer Nachricht (411) von einem Nutzergerät (102, 204, 304), die anzeigt, dass es für das Nutzergerät (102, 204, 304) akzeptabel wäre, dass eine oder mehrere gewünschte Eigenschaften einer Bereitstellung eines Kommunikationsdienstes für das Nutzergerät nicht erfüllt werden, wenn dadurch der Energieverbrauch des Kommunikationsnetzes (202) zum Bereitstellen des Kommunikationsdienstes reduziert werden kann;
   Bestimmen, durch das Kommunikationsnetz (202), einer Mehrzahl von Optionen zum Bereitstellen des Kommunikationsdienstes für das Nutzergerät (102, 204, 304);
   Bestimmen (602), durch das Kommunikationsnetz (202) und als Reaktion auf den Empfang der Nachricht (411), für jede der Mehrzahl von Optionen zum Bereitstellen des Kommunikationsdienstes für das Nutzergerät (102, 204, 304), jeweiliger Energieverbrauchsinformationen über den Energieverbrauch des Kommunikationsnetzes (202) zum Bereitstellen des Kommunikationsdienstes für das Nutzergerät (102, 204, 304);

Benachrichtigen (603), über das Kommunikationsnetz (202), des Nutzergeräts (102, 204, 304) über den Kommunikationsdienst hinsichtlich der

Energieverbrauchsinformationen für jede der Mehrzahl von Optionen;

Empfangen (604), von dem Nutzergerät (102, 204, 304), einer Anforderung zum Bereitstellen des Kommunikationsdienstes gemäß einer der Mehrzahl von Optionen; und

Bereitstellen (605), durch das Kommunikationsnetz (202), des Kommunikationsdienstes gemäß der einen der Mehrzahl von Optionen.

2. Das Verfahren nach Anspruch 1, wobei sich die Mehrzahl von Optionen in mindestens einem unterscheidet von der Dienstgüte des Kommunikationsdienstes, welches Netz-Slice einer Mehrzahl von Netz-Slices (106, 107) des Kommunikationsnetzes (202) zum Bereitstellen des Kommunikationsdienstes verwendet wird, dem Bereitstellungszeitpunkt des Kommunikationsdienstes, der Auflösung von durch den Kommunikationsdienst übertragenen Videodaten.

3. Das Verfahren nach Anspruch 1 oder 2, wobei die gewünschte Eigenschaft eine Dienstgüte und/oder ein Bereitstellungszeitpunkt des Kommunikationsdienstes ist.

4. Das Verfahren nach Anspruch 3, wobei die Nachricht (411) jeweils einen Bereich der Dienstgüte und/oder des Bereitstellungszeitpunkts des Kommunikationsdienstes anzeigt.

5. Das Verfahren nach einem der Ansprüche 1 bis 4, wobei die Energieverbrauchsinformationen Informationen darüber aufweisen, ob und/oder in welchem Umfang der durch das Kommunikationsnetz zum Bereitstellen des Kommunikationsdienstes verbrauchte Energieverbrauch gemäß der jeweiligen Option aus erneuerbaren Energien stammt.

6. Das Verfahren nach einem der Ansprüche 1 bis 5, wobei die Energieverbrauchsinformationen Informationen über die Umweltauswirkungen der Bereitstellung des Kommunikationsdienstes gemäß der jeweiligen Option aufweisen.

7. Das Verfahren nach einem der Ansprüche 1 bis 6, aufweisend das Bestimmen der Informationen über die Umweltauswirkungen zumindest teilweise von einer Stromversorgung (314) des Kommunikationsnetzes (202).

8. Das Verfahren nach einem der Ansprüche 1 bis 7, aufweisend das Bestimmen, für jede der Mehrzahl von Optionen zum Bereitstellen des Kommunikationsdienstes, einer jeweiligen Vergütung für einen Nutzer des Nutzergeräts (102, 204, 304) für die Nutzung der Option.

9. Das Verfahren nach einem der Ansprüche 1 bis 8, wobei jede der Optionen die Nutzung mindestens eines jeweiligen Dienstgüte-Flusses aufweist, wobei sich der mindestens eine Dienstgüte-Fluss zwischen den Optionen unterscheidet.

10. Das Verfahren nach einem der Ansprüche 1 bis 9, wobei das Kommunikationsnetz (202) ein Funkzugangsnetz (103, 301), ein Kernnetz (119, 303) und ein Transportnetz (302) aufweist, und wobei das Bestimmen der Energieverbrauchsinformationen für eine Option das Schätzen des Energieverbrauchs von jedem von dem Funkzugangsnetz (103, 301), dem Kernnetz (119, 303) und dem Transportnetz (302) sowie das Schätzen der Energieverbrauchsinformationen für die Option aus dem geschätzten Energieverbrauch des Funkzugangsnetzes (103, 301), des Kernnetzes (119, 303) und des Transportnetzes (302) aufweist.

11. Das Verfahren nach Anspruch 10, wobei die Energieverbrauchsinformationen für eine Option durch eine Energiemanager-Komponente (321, 405) des Kommunikationsnetzes (202) bestimmt werden, die die Schätzung des Energieverbrauchs des Funkzugangsnetzes (103, 301) von einer Energieagenten-Komponente (317) des Funkzugangsnetzes (103, 301), die Schätzung des Energieverbrauchs des Kernnetzes (119, 303) von einer Energieagenten-Komponente (319) des Kernnetzes (119, 303) und die Schätzung des Energieverbrauchs des Transportnetzes (302) von einer Energieagenten-Komponente (318) des Transportnetzes (302) beschafft.

12. Das Verfahren nach einem der Ansprüche 1 bis 11, aufweisend das Bestimmen der Mehrzahl von Optionen in Abhängigkeit von einem Standort des Nutzergeräts (102, 204, 304) und/oder einer Vorhersage eines oder mehrerer zukünftiger Standorte des Nutzergeräts (102, 204, 304).

13. Das Verfahren nach einem der Ansprüche 1 bis 12, aufweisend das Bestimmen, für einen angeforderten Kommunikationsdienst, ob der Kommunikationsdienst als Kommunikationsdienst mit hohem Energieverbrauch einzustufen ist, sowie das Bestimmen der Energieverbrauchsinformationen und das Benachrichtigen des Nutzergeräts (102, 204, 304) über den Energieverbrauch als Reaktion auf die Feststellung, dass der angeforderte Kommunikationsdienst als Kommunikationsdienst mit hohem Energieverbrauch einzustufen ist.

14. Das Verfahren nach einem der Ansprüche 1 bis 13, wobei das Nutzergerät (102, 204, 304) ein Teilnehmerendgerät oder eine Anwendungsfunktion ist.

15. Ein Kommunikationsnetz (100, 202), das zur Durchführung des Verfahrens nach einem der Ansprüche 1 bis 14 eingerichtet ist.

**Revendications**

1. Procédé (600) pour fournir un service de communication par un réseau de communication (202), comprenant :

    la réception (601), par le réseau de communication (202), d'un message (411) provenant d'un dispositif utilisateur (102, 204, 304) indiquant qu'il serait acceptable pour le dispositif utilisateur (102, 204, 304) qu'une ou plusieurs caractéristiques souhaitées d'une fourniture d'un service de communication au dispositif utilisateur ne soient pas satisfaites, si cela permet de réduire la consommation d'énergie du réseau de communication (202) pour fournir le service de communication ;
    la détermination, par le réseau de communication (202), d'une pluralité d'options pour fournir le service de communication au dispositif utilisateur (102, 204, 304) ;
    la détermination (602), par le réseau de communication (202) et en réponse à la réception du message (411), pour chacune de la pluralité d'options pour fournir le service de communication au dispositif utilisateur (102, 204, 304), d'informations de consommation d'énergie respectives concernant la consommation d'énergie du réseau de communication (202) pour fournir le service de communication au dispositif utilisateur (102, 204, 304) ;
    la notification (603), via le réseau de communication (202), au dispositif utilisateur (102, 204, 304) du service de communication des informations de consommation d'énergie pour chacune de la pluralité d'options ;
    la réception (604), de la part du dispositif utilisateur (102, 204, 304), d'une demande de fourniture du service de communication selon l'une de la pluralité d'options ; et
    la fourniture (605), par le réseau de communication (202), du service de communication selon ladite une de la pluralité d'options.

2. Procédé selon la revendication 1, dans lequel la pluralité d'option diffèrent au moins sur l'un parmi la qualité de service du service de communication, laquelle tranche de réseau d'une pluralité de tranches de réseau (106, 107) du réseau de communication (202) est utilisée pour fournir le service de communication, le moment de fourniture du service de communication, la résolution des données vidéo transmises par le service de communication.

3. Procédé selon la revendication 1 ou 2, dans lequel la caractéristique souhaitée est une qualité de service et/ou un moment de fourniture du service de communication.

4. Procédé selon la revendication 3, dans lequel le message (411) indique respectivement une plage de qualité de service et/ou de temps de la fourniture du service de communication.

5. Procédé selon l'une quelconque des revendications 1 à 4, dans lequel les informations de consommation d'énergie comprennent des informations indiquant si et/ou dans quelle mesure l'énergie consommée par le réseau de communication pour fournir le service de communication est une énergie renouvelable selon l'option respective.

6. Procédé selon l'une quelconque des revendications 1 à 5, dans lequel les informations de consommation d'énergie comprennent des informations concernant l'impact environnemental de la fourniture du service de communication selon l'option respective.

7. Procédé selon l'une quelconque des revendications 1 à 6, comprenant la détermination des informations de l'impact environnemental au moins partiellement à partir d'une alimentation électrique (314) du réseau de communication (202).

8. Procédé selon l'une quelconque des revendications 1 à 7, comprenant la détermination, pour chacune de la pluralité d'options de fourniture du service de communication, d'une compensation respective pour un utilisateur du dispositif utilisateur (102, 204, 304) pour l'utilisation de l'option.

9. Procédé selon l'une quelconque des revendications 1 à 8, dans lequel chacune des options comprend l'utilisation d'au moins un flux de qualité de service respectif, dans lequel ledit au moins un flux de qualité de service diffère parmi les options.

10. Procédé selon l'une quelconque des revendications 1 à 9, dans lequel le réseau de communication (202) comprend un réseau d'accès radio (103, 301), un réseau central (119, 303) et un réseau de transport (302), et dans lequel la détermination des informations de consommation d'énergie pour une option comprend l'estimation de la consommation d'énergie de chacun parmi le réseau d'accès radio (103, 301), le réseau central (119, 303) et le réseau de transport (302), et l'estimation des informations de consommation d'énergie pour l'option à partir de la consommation d'énergie estimée du réseau d'accès radio (103, 301), du réseau central (119, 303) et du réseau de transport (302).

11. Procédé selon la revendication 10, dans lequel les informations de consommation d'énergie pour une option sont déterminées par un composant gestionnaire d'énergie (321, 405) du réseau de communication (202) qui acquiert l'estimation de la consommation d'énergie du réseau d'accès radio (103, 301) à partir d'un composant agent d'énergie (317) du réseau d'accès radio (103, 301), l'estimation de la consommation d'énergie du réseau central (119, 303) à partir d'un composant agent d'énergie (319) du réseau central (119, 303) et l'estimation de la consommation d'énergie du réseau de transport (302) à partir d'un composant agent d'énergie (318) du réseau de transport (302).

12. Procédé selon l'une quelconque des revendications 1 à 11, comprenant la détermination de la pluralité d'options en fonction d'un emplacement du dispositif utilisateur (102, 204, 304) et/ou d'une prédiction d'un ou de plusieurs emplacements futurs du dispositif utilisateur (102, 204, 304).

13. Procédé selon l'une quelconque des revendications 1 à 12, comprenant la détermination, pour un service de communication demandé, du fait que le service de communication est un service de communication à forte consommation d'énergie, et la détermination des informations de consommation d'énergie et la notification au dispositif utilisateur (102, 204, 304) de la consommation d'énergie en réponse à la détermination selon laquelle le service de communication demandé est un service de communication à forte consommation d'énergie.

14. Procédé selon l'une quelconque des revendications 1 à 13, dans lequel le dispositif utilisateur (102, 204, 304) est un terminal d'abonné ou une fonction d'application.

15. Réseau de communication (100, 202) configuré pour mettre en œuvre le procédé selon l'une quelconque des revendications 1 à 14.

# FIG 1

NS = Network Slice
NSI = Network Slice Instance
NSSF = Network Slice Selection Function
—— User Plane interface
---- Control Plane interface

OAM 116

100

119

NRF 118

NWDAF 117

SMF#1 110

UPF#1 111

eMBB- NSI#1 106

108
108
108

UE 102

RAN 103

AMF 101

AUSF 114

PCF 115

UDM 104

NSSF 105

SMF#2

V2X - NSI#2 107

UPF#2

112

113

109
109
109

EP 4 498 734 B1

# FIG 2

**FIG 3**

EP 4 498 734 B1

# FIG 4

EP 4 498 734 B1

# FIG 5

**501**

**502**     **UE**

**503**     **5G/6G**

Video Game →

**1) APP: playing 4K game now but**
- User likes to contribute to EE
- Instead of 4K, HD is also acceptable
- Instead of now, 1 hour later is also ok

**2) UE agent starts negotiation**

**3) The network provides the following offers**
    #1: (now, 4K, EC1, EI1, 0)
    #2: (now, HD, EC2, EI2, 10)
    #3: (+30min, 4K, EC3, EI3, 20)
    #4: (+1h, HD, EC4, EI4, 40)

#1: (...)
#2: (...)
...

**4) UE agent notifies the end use**

#3

**5) End user based on her preferences, evaluates these proposal and selects one of them, e.g., #3**

**6) Agent informs 5G about the user's decision**

**8) Network provisions the service expecting the predicted EC and EI, and also considers the compensation for the UE**

**7) At +30min, customer request 4K game**

EP 4 498 734 B1

# FIG 6

600

601

Receive message indicating that it would be acceptable for a user device that desired characteristics of a provision of a communication service to the user device are not met if by this energy consumption of the provision of the communication service can be reduced

602

Determine, in response to receiving the message, for each of a plurality of options for providing a communication service to a user device, respective energy consumption information about energy consumption of the communication network to provide the communication service to the user device

603

Notify the user device of the communication service about the energy consumption information for each of the plurality of options

604

Receive, from the user device, a request for providing the communication service according to one of the plurality of options

605

Provide the communication service according to the one of the plurality of options

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020260376 A1